# EUROPEAN PATENT APPLICATION

(11) **EP 1 563 945 A2**
(43) Date of publication of application: **17.08.2005**
(21) Application number: 05250704.3
(22) Date of filing: 08.02.2005
(51) Int. Cl.: B23P 6/00, B23K 26/34

(54) **Repair of article by laser cladding**

(30) Priority: 13.02.2004 US 779395
(71) Applicant: United Technologies Corporation, East Hartford, CT 06108 (US)
(72) Inventor: Cheng, Kenny, Singapore 641681 (SG); Loh, Sin Yee, Singapore 310035 (SG); Ang, Eng Soon, Singapore 680635 (SG); Ong, Eng Thong, Singapore 560306 (SG)
(74) Representative: Hall, Matthew Benjamin

(57) **Abstract**

A method of repairing an article, such as turbine parts of a rotary gas turbine engine, affected by sulphidation includes the steps of providing an article having a section affected by sulphidation (20), removing the affected section, and laser cladding a replacement section (50) to the article.

## Description

The present invention relates to a method of repairing an article affected by sulphidation, such as a gas turbine engine part.

A rotary gas turbine engine includes a compressor section, a combustion section, and a turbine section. Disposed within the compressor and turbine section are rows of rotatable blades on a turbine wheel interlaced between stationary turbine vanes (stator vanes). Each blade or vane has one or more platforms that help define the boundary of the core gas flow through the engine. As hot combustion gases pass through turbine engine, and in particular through the turbine section, the blades are rotatably driven, turning a shaft and thereby providing shaft work for driving the compressor section and other auxiliary systems. The higher the gas temperature, the more work that can be extracted in the turbine section and the greater the overall efficiency. In order to increase the turbine section operating temperature capability, superalloy materials are used to produce the turbine airfoils (blades and vanes). Such materials maintain mechanical strength at high temperatures.

In service, various surfaces of the turbine blades or turbine vanes are prone to deterioration as a result of sulphidation attack. Sulphidation attack, sometimes known as hot corrosion, is a form of corrosion caused by sulphates, usually Na₂SO₄ and other contaminants. The sulphidation attack fluxes, destroys, or disrupts the normal structure of the metal and, over time, the metal's carbide network is dissolved.

When a turbine engine has operated a predetermined number of flight hours, a complete overhaul of the turbine engine is required by the engine manual. The engine is dismantled and a routine inspection of the blades and vanes is conducted. If damage is found, then the blades are scrapped or repaired.

Should a routine inspection of the turbine airfoil during a maintenance operation reveal damage due to sulphidation, then the structure will be abrasively cleaned. The cleaning process may cause the structures to become very thin after cleaning. Above a given thickness, the airfoil can be reused in the engine. Below a given thickness, either a replacement airfoil must be used (*i*.*e*. the airfoil will be scrapped) or the airfoil must be repaired by replacing any eroded material or otherwise restoring the eroded section.

Several methods exist for repairing these blade or vane structures. Braze repairs use materials with melting points that are lower than that of the superalloy material being repaired. Consequently, oxidation and corrosion occurs on the brazing alloy instead of the superalloy component. However, the brazing alloy has lower high temperature strength than the repaired article and therefore lacks the same resistance to high temperatures.

Another method involves tungsten inert gas welding. Tungsten inert gas weld repair procedures are often used to carry out rotor blade and stator vane restoration. However, tungsten inert gas welding has a large heat affected zone, which can later lead to post-weld stress and loss of structural integrity of the part repaired. Further, distortion is a frequent occurrence of tungsten inert gas welding.

Yet another method involves a plasma spray process directed at the specific area of deterioration. During the plasma spray process, alloy is added to the surface in very thin layers, forming a broad even pattern. After completion of the plasma spray, the excess material must be removed from non-eroded areas of structure. If the deterioration is severe in specific areas, numerous layers of the alloy must be added and much of it removed from the non-eroded areas. Such a procedure is very time consuming and may be damaging due to the thermal stresses involved in the plasma spray operation.

Wire-feed electron beam processes are also frequently used in repair of superalloys. In these instances, heat on the superalloy must be very carefully controlled because hot cracking and microfissuring during welding may occur.

A method of repairing structures within a rotary gas turbine engine is needed that can restore the structure to operating specifications and also minimizes the area of the heat affected zone and the creation of post-weld stress.

A method of repairing an article affected by sulphidation includes the steps of providing an article having a section affected by sulphidation, removing the affected section, and laser cladding a replacement section to the article.

Further, a method of repairing an article affected by sulphidation includes the steps of providing an article having a section affected by sulphidation, removing the affected section by machining, laser cladding a replacement section to the article; and removing excess material resulting from the laser cladding.

Still further, a method of repairing a turbine blade affected by sulphidation includes the steps of providing a turbine blade having a structure affected by sulphidation, removing the affected structure of the turbine blade by machining, laser cladding a replacement structure to the turbine blade, and removing excess material from the turbine blade resulting from the laser cladding.

Certain preferred embodiments will now be described in greater detail by way of example only and with reference to the accompanying drawings in which:
FIG. 1 is an isometric view of a turbine blade;
FIG. 2 is an isometric view of a turbine blade exhibiting a region on the platform that has undergone a sulphidation attack;
FIG. 3 is an isometric view of the turbine blade of FIG. 2 after cleaning and removal of the sulphidated area;
FIG. 4 is a schematic of a conventional laser powder injection focusing arrangement suitable for use in the method of the present invention;
FIG. 5 is a schematic of an alternate laser powder injection focusing arrangement suitable for use in the method of the present invention;
FIG. 6 is a sectional diagram of the platform having properly laser cladded layers thereon;
FIG. 7 is an isometric view of the turbine blade of FIG. 2 with excess alloy material on the platform; and
FIG. 8 is a flow diagram of an embodiment of the method of platform repair by laser cladding.

One embodiment of the present invention will be illustrated by the following description of a repair of a root platform of a turbine blade. It should be understood that any article that may be affected by sulphidation attack could be repaired using the methods of the present invention, including any structure within a rotary gas turbine engine.

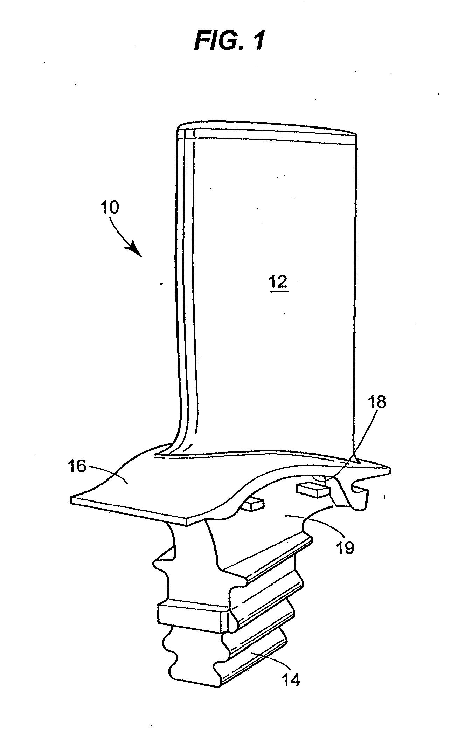

As illustrated in FIG. 1, a turbine blade 10 composed of a superalloy material and suitable for repair using the method of the present invention includes an airfoil 12, a serrated blade root 14 (used to attach the blade to the rotatable turbine disk) and a blade platform 16 located between the airfoil and serrated blade root 14. The blade platform 16 has an underside 18. The region between the underside 18 and the serrated blade root 14 is commonly referred to as a neck 19. Typically, turbine blades 10 (and other gas turbine engine components) are composed of a directionally solidified nickel-based alloy, e.g., including a single crystal or with multiple columnar grains oriented parallel to the direction of growth. U.S. Patents describing columnar and single crystal and directionally solidified alloys include U.S. Pat. Nos. 4,209,348; 4,643,782; 4,719,080; 5,068,084.

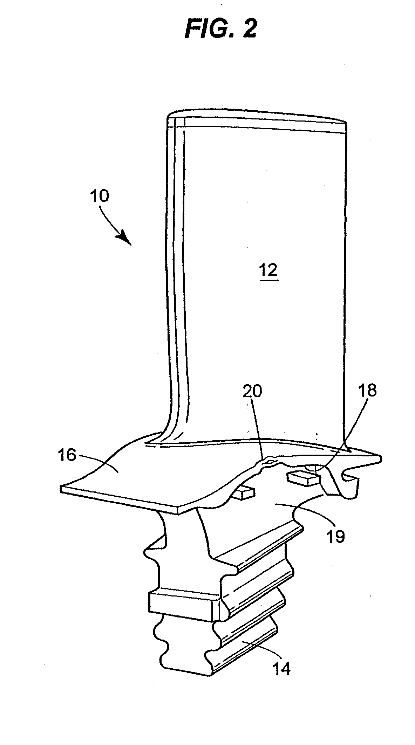

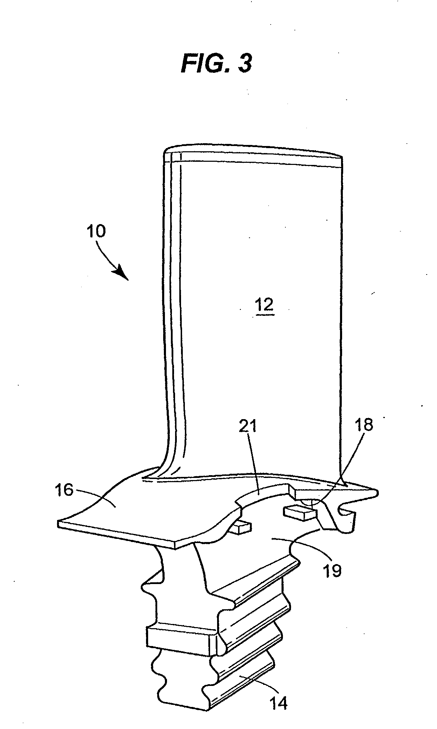

While in service, the turbine blade 10 may be compromised due to sulphidation attack as shown in FIG. 2. Although any suitable cleaning process could be used, typically abrasive cleaning, such as grit blast cleaning, is used to remove most of the sulphidation from a sulphidation affected section 20 on the blade. The abrasive cleaning may leave the platform 16 thin and outside the applicable parameters, such as those specified in the relevant engine manual. To repair the platform 16 after abrasive cleaning, the sulphidation affected section 20 is removed from the platform 16 by any suitable technique, such as by cutting, shaping or finishing by machine as shown in FIG. 3. A person having ordinary skill in the art will know how to machine the turbine blade 10 to remove the sulphidation affected section 20 in preparation for laser cladding. A machined section 21 with the sulphidation affected section 20 removed will then be laser cladded as discussed below.

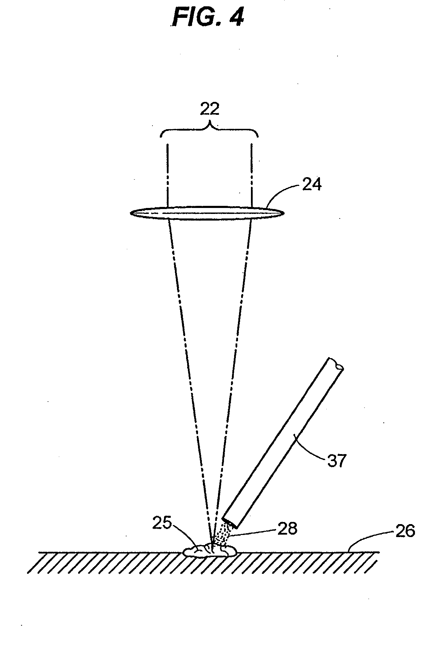

As illustrated in FIG. 4, an example of a laser cladding process utilizes a defocused or a rastered laser beam 22 to deposit a layer of material onto a substrate 26, in this instance the machined section 21 of the low-pressure turbine blade platform 16. The laser beam 22 is focused by a focal lens 24 on a substrate 26 or on an elevated point 27 just above the substrate 26. An example of an apparatus capable of performing such laser cladding process is the HC-205, available from Huffman Corp. of Clover, South Carolina, 29710, U.S.A.

If the focal lens 24 is focused on the substrate 26, a small molten pool of material 25 is formed and injected powder 28 melts in the molten pool of material 25. The addition of the powder 28 by the powder injection device 37 alters the composition of the surface area in the desired manner. When the laser beam 22 is removed from the molten pool of material 25, the molten pool of material 25 rapidly chills, which can result in hardening due to phase changes in the solid metal of the substrate 26.

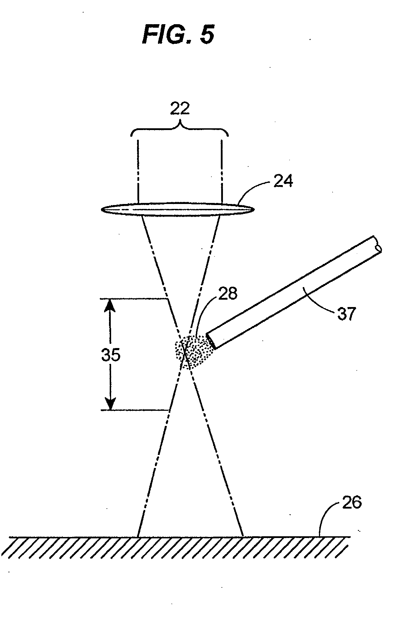

Alternatively, the focal lens 24 of the laser beam 22 may be focused at an elevated point 27 slightly above the surface of the substrate 26, as shown in FIG. 5. This configuration results in a defocused hot zone 35 into which a powder 28 is injected via powder injection device 37. The powder 28 is heated sufficiently so that it is in a plastic state when it impacts the substrate 26. Upon impacting the substrate 26, the heated powder 28 is rapidly quenched by the relatively cool substrate 26, which acts as a heat sink. Other laser cladding methods and techniques known to those of skill in the art can also be used. An apparatus capable of performing such laser cladding process is described in U.S. Pat. No. 5,449,536.

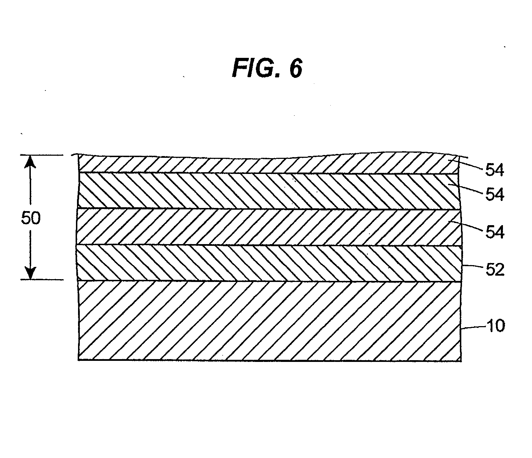

The powder 28 is similar in composition to the substrate 26, in this case the blade platform 16, being repaired. The level of energy from the laser beam, powder characteristics, gas flow, and how the platform 16 is manipulated during the laser cladding process are all well known to someone skilled in the art of laser cladding. As depicted in FIG. 6, a replacement section 50 is made of a first layer 52 of material 28 metallurgically bonded to the blade platform 16 and to subsequent layers 54 of material 28 metallurgically bonded to the first layer 52. The first layer 52 and all subsequent layers 54 must meet or exceed the physical parameters of the contour of the blade platform 16 as shown in FIG. 1 (i. e. provide a surplus, not a deficit, of material). The laser cladding process should provide a very shallow to non-existent heat affected zone. Further, the replacement section 50 should have a uniform microstructure with a smooth crack-free boundary between the replacement section 50 and the substrate 26.

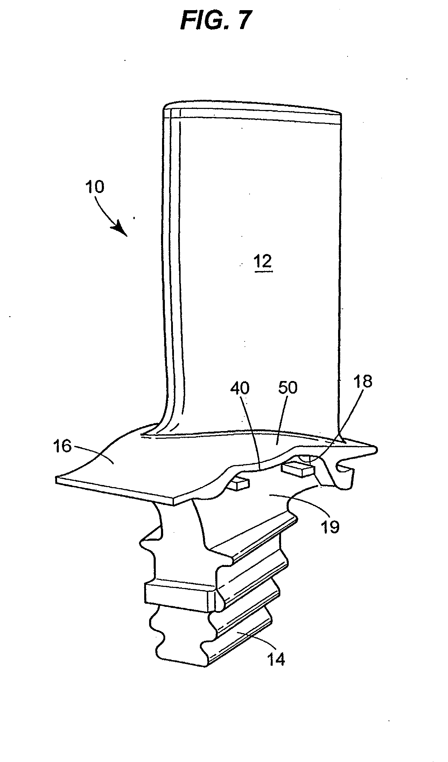

FIG. 7 shows excess alloy material 40 that has accumulated beyond the necessary physical parameters of the contour of the turbine blade 10 (*i*.*e*. a surplus of material). A further embodiment includes the step of machining the excess alloy material 40 from the blade platform 16. A person having ordinary skill in the art will know how to machine the root platform to its desired dimensions (*i*.*e*. so that it conforms to the proper size and shape to be within specification). The result is a replacement section 50 that meets the specifications provided in the engine manual. An example of an apparatus capable of performing such machining is the 12-24DX Grinding Machine available from Okamoto Corp. of Illinois, U.S.A.

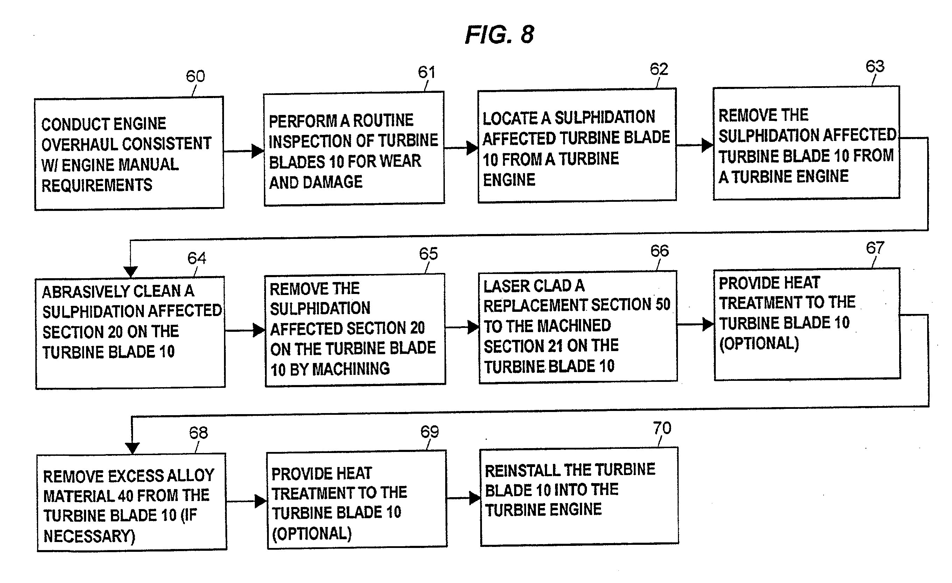

FIG. 8 illustrates, by way of a flow diagram, one embodiment of the method of platform repair by laser cladding. First, an engine overhaul 60 is conducted as required by the engine manual. During the engine overhaul 60, a routine inspection 61 of the turbine blades 10 is performed. Next, a sulphidation affected turbine blade 10 is identified in a turbine engine during the affected blade location step 62. The sulphidation affected turbine blade 10 is removed from the turbine engine for cleaning during a removal step 63. Then, at cleaning step 64, a sulphidation affected section 20 is thoroughly and abrasively cleaned so that all or substantially all of the sulphidation is removed. As a result of the abrasive cleaning, the sulphidation affected section 20 may be much thinner and may not have sufficient dimensions for reinstallation into the turbine engine. During a machining step 65, the sulphidation affected section 20 is removed, leaving a machined section 21. The machined section 21 is essentially a void to be filled by a replacement section 50 of similar composition using the process of laser cladding. At a laser cladding step 66, a replacement section 50 is metallurgically bonded to the turbine blade. A heat treating step 67 may be necessary to attain the desired conditions or properties of the replacement section 50 that are inherent in the turbine blade 10. The heat treating step 67 however, is optional. If the replacement section 50 exceeds the physical parameters of the specifications of the turbine blade 10 because of excess alloy material 40 then the turbine blade 10 will be machined to bring the turbine blade 10 within those specifications, as is shown in excess alloy step 68. If needed, a heat treating step 69 may be employed to achieve optimum performance of the repaired turbine blade 10. Finally, the turbine blade 10 is reinstalled into the turbine engine during a conventional reinstallation step 70.

While the method of the present invention has been described in the context of repairing turbine blade root platforms, it should be recognized that the method of the present invention may be utilized to repair, restore, or refurbish a surface of any part that may be affected by sulphidation.

Numerous modifications to the present invention will be apparent to those skilled in the art in view of the foregoing description. Accordingly, this description is to be construed as illustrative only and is presented for the purpose of enabling those skilled in the art to make and use the invention and to teach the best mode of carrying out same. The exclusive rights to all modifications which come within the scope of the appended claims are reserved.

## Claims

1. A method of repairing an article affected by sulphidation, comprising the steps of:
providing an article having a section (20) affected by sulphidation;
removing the affected section; and
laser cladding a replacement section to the article.

2. The method of claim 1 including the step of removing excess material resulting from the laser cladding.

3. The method of claim 1 or 2 wherein the affected section (20) is removed by machining.

4. The method of claim 1, 2 or 3, further comprising the step of removing sulphidation by abrasive cleaning.

5. The method of any preceding claim, further comprising the step of machining excess material (40) from the article.

6. The method of any preceding claim including the step of restoring the dimensions of the article.

7. The method of any preceding claim, further comprising the step of heat treating the replacement section (50).

8. The method of any preceding claim, wherein the replacement section is similar in composition to the article

9. The method of any preceding claim, wherein the article is an airfoil.

10. The method of claim 9, wherein the airfoil (12) is a turbine blade (10).

11. The method of claim 10, wherein the affected section (20) is a part of a platform (16) of the turbine blade (10).

12. The method of claim 11, wherein the affected section (20) is a part of a root platform (16) of the turbine blade (10).

13. The method of claim 9, wherein the airfoil is a turbine vane.
